# EUROPEAN PATENT SPECIFICATION

(11) **EP 2 236 276 B1**
(45) Date of publication and mention of the grant of the patent: **10.07.2013**
(21) Application number: 10157489.5
(22) Date of filing: 24.03.2010
(51) Int. Cl.: B32B 5/14, B32B 15/08

(54) **Thermal insulating multiple layer blanket**
Wärmeisolierende mehrschichtige Decke
Couche de couverture multiple à isolation thermique

(30) Priority: 02.04.2009 US 416969
(43) Date of publication of application: 06.10.2010
(73) Proprietor: Xerox Corporation, Rochester, New York 14644 (US)
(72) Inventor: Platt, David P., Newburg,, OR 97132 (US); Broderick, Joseph A., Milwaukie, OR 97222 (US)
(74) Representative: Grünecker, Kinkeldey, Stockmair & Schwanhäusser

(56) References cited:
- FR-A1- 2 763 616
- US-A- 4 381 716
- US-A- 5 549 956
- US-B1- 6 544 618

## Description

### BACKGROUND

Disclosed herein is a thermal insulating multiple layer blanket comprising a plurality of reflective film layers, at least two of which are separated by a conductive barrier; which is thin, flexible, and provides excellent thermal conductivity at a low cost.

Multilayer insulation typically consists of alternating layers of highly reflective material, and a low-conductivity material between each layer. Such multilayer insulation blankets may be used in a variety of applications where it is desirable to reduce heat transfer.

U.S. Patent No. 6,544,618 describes an insulating composite comprising a first thermally reflective layer having a reflective surface and an opposite surface, a second thermally reflective layer having a reflective surface and an opposite surface, and a porous metal oxide film having a thickness of 20 µm or less that is positioned between the first and the second thermally reflective layers such that there is substantially no direct physical contact between the first and second thermally reflective layers.

U.S. Patent No. 5,549,956 describes an improved flexible multilayer heat reflective blanket for use in the curing of concrete and other insulative uses. Also disclosed is an improved method of insulation incorporating the heat reflective characteristics of metallic foil layers. The blanket comprises thermoplastic, moisture-impervious outer surface layers which enclose insulative layers and heat reflective layers of aluminum foil or like heat reflective materials. The foil layers contain the heat radiating from the surface to be insulated by reflecting heat escaping through the insulative layers of the blanket back through the insulative layers towards the insulated surface, resulting the a heat reflective blanket with increased thermal resistance without a corresponding increase in thickness. The use of heat reflective layers obviates the need for additional layers of insulation resulting in a thinner, lightweight and more flexible heat reflective blanket.

NASA's Silica Aerogel provides excellent thermal conductivity properties, but is very expensive to manufacture, is brittle, is only available in limited solid shapes, and must be coated to make it hydrophobic and to prevent it from shedding particles.

Aspen Aerogels' Spaceloft Aerogel blanket also has excellent thermal conductivity properties, but is relatively thick and must also be coated to prevent it from shedding particles.

Despite the satisfactory performance of conventional multilayer insulation, such as those described above, in many applications, there remains a need for an improved multilayer insulation. In particular, a need remains for thin, flexible multilayer insulation with excellent insulative properties, that is easy to manufacture at a low cost, is desirable.

### SUMMARY

Embodiments include an insulating blanket having a plurality of film layers and at least one conductive barrier disposed between at least two of the plurality of film layers, where at least one of the film layers is made of a film coated on at least one side with a heat reflective material.

Other embodiments include an insulating blanket having at least two polymer film layers, where each layer is metallized on one side, and a thermoplastic mesh conductive barrier between each of the polymer film layers.

Other embodiments include a print head having the insulating blanket of any of the embodiments described herein.

### BRIEF DESCRIPTION OF THE DRAWINGS

FIG. 1 shows a cross sectional view of an exemplary embodiment.

FIG. 2 shows a flat view of a conductive barrier of an exemplary embodiment.

FIG. 3 shows a an embodiment in association with print heads.

### EMBODIMENTS

Described herein is an insulation blanket comprising a plurality of film layers, for example, two or more film layers, such as from 2 to about 100, with at least two of the film layers being separated by a conductive barrier.

More generally, the film layers of the embodiments may comprise any thin and flexible film. The film layers may be made of polymer films, such as, for example, polyimide (PI), polyethylene (PE), polyethylene terephthalate (PET), polyamide (PA), polypropylene (PP), polyvinyl dichloride (PVDC) and the like. Many such films are available commercially, such as, for example Mylar^{™} films.

Suitable films may be from, for example, about 0.5 mils to about 10 mils thick, or from about 0.5 mils to about 5 mils thick, or from about 0.5 mils to about 2 mils thick, or from about 0.5 mils to about 1 mils thick.

Each film layer, independently, may be coated on one or both sides with a heat reflective material capable of reducing the radiative emittance, or emissivity, of the film layer. Coatings may include, for example, metals or other heat reflective coatings. Metals such as aluminum, silver, gold, platinum, copper, nickel and the like may be used to coat the individual film layers. Films coated with metal are referred to herein as metallized film. Any material that is effective in inhibiting radiative heat transfer may be used as the heat reflective material, that may coat each film layer. Typically, such heat reflective materials may have a polished surface appearance. The heat reflective material may have any suitable thickness, preferably from about 0.4 µm to about 1 µm

Depending upon the particular application, the heat reflective surface of the film layers may, independently, face toward or away from the surface to be insulated. In embodiments having multiple film layers, the reflective surfaces may desirably face the same direction.

The heat reflective material may be applied to a film layer by any means, such as, for example, by physical vapor deposition (PVD), a commonly employed method for applying thin layers of metal to substrates including polymer films. Other methods of applying a heat reflective material include, for example, chemical vapor deposition, lamination, spray coating and the like.

The conductive barrier between at least two of the film layers may be made of any suitable material. Such materials may be constructed so as to comprise a network of material, which may provide support for each film layer between which the conductive barrier is disposed. By network is intended a connected structure of solid portions of a layer, as in, for example, a mesh structure with solid portions separated by voids or pockets. The solid portions make up the network. The network may have a regular pattern, or may be random. The multiple voids, or small pockets within the network may be filled with air or other suitable materials.

The conductive barrier may be of any suitable density (network vs. voids) such that it prevents the film layers between which it is disposed from contacting each other. Limiting the amount of network in the conductive barrier may reduce the conductive path between each film layer. The conductive barrier may comprise from about 10% to about 40% network, or from about 20% to about 40% network, or from about 30% to about 40% network, and may comprise any amount between the above values, including, for example, about 30, 31, 32, 33, 34, 35, 36, 37, 38, 39 or 40% network.

The conductive barrier may be of any suitable thickness. Some embodiments may utilize a conductive barrier of from about 0.5 mils to about 10 mils, or from about 0.5 mils to about 3 mils, or from about 0.5 mils to about 2 mils, or from about 0.5 mils to about 1 mil.

The voids within the conductive barrier of some embodiments may be filled with air, oxygen, other gases, liquids or different solid materials from the network, such as a foam.

The thickness and density of the conductive barrier may be optimized to maximize the conductive barrier function while preventing the film layers between which it is disposed from contacting each other. In embodiments where, for example, relatively thick film layers are utilized, a relatively thin conductive barrier may be sufficient to prevent the film layers from contacting each other. Alternatively, in embodiments where relatively thin film layers are utilized, the conductive barrier may be relatively thick to prevent the film layers from contacting each other. It is contemplated that the thickness and density of the conductive barrier may be optimized for different combinations of materials and for particular applications.

Suitable materials for the conductive barrier include, for example, polyethylene terephthalate (PET), polyimide (PI), polyethylene (PE), polypropylene (PP), polyvinyl dichloride (PVDC) and the like, or combinations thereof.

Separating at least two of the multiple film layers, desirably separating each film layer from other film layers, is a conductive barrier. The film layers adjacent to the conductive barrier may be bonded to the conductive barrier, by for example, use of adhesives or heat bonding. The conductive barrier materials may desirably have a thermoplastic component, so as to make the conductive barrier amenable to heat bonding. The thermoplastic component may be of the same material as the conductive barrier, or a different thermoplastic material may optionally be added to the conductive barrier.

Embodiments of the insulating blanket may have either film layers or conductive barrier as the outer layers. In such embodiments, when the blanket is utilized in various applications, either a film layer or a conductive barrier may be in contact with the item to be insulated, and similarly either a film layer or a conductive barrier may be exposed to the environment. Desirably, film layers are the outside layers, such that when the blanket is utilized in applications, a film layer is in contact with the item to be insulated and a film layer is exposed to the environment. Other outer layers may optionally be added, such as for appearance, or to provide protection for the blanket. In some embodiments, an outer cover layer may optionally be used in conjunction with the insulation blanket, for example, to provide protection to the blanket, to facilitate handling or for appearance. In other embodiments, the insulating blanket may be disposed within a container, such as for example, an air impermeable polymeric container. These embodiments may be utilized in the same manner as the insulating material itself, for example, applied to a surface of an item requiring insulation.

Each film layer of the insulating blanket may be of the same or different materials and construction. In other words, the materials for each film layer may be selected independently of the other film layers in the blanket. Likewise, the conductive barrier between at least two film layers may be the same or different relative to any conductive barriers between any other film layers. In some embodiments, each film layer is made from the same materials, and the conductive barriers between film layers are the same.

Embodiments of the insulating blanket may comprise any suitable number of film layers. For example, two or more film layers may be used. The number of film layers is limited only by the particular application for which the insulating blanket is used, and by the thickness of the film layers and the conductive barriers. An application may call for a very thin insulating blanket, due to low clearances, for example. In such applications, the overall thickness may be such that the blanket will fit within the space available. Therefore, the total number of film layers is limited by the thickness of each individual film layer and the nonconductive barrier between film layers, such that the total thickness is within the desired range. For example, in applications where the insulating blanket is utilized for insulating solid ink print heads, the space available is limited. For example, there may be a small gap between multiple heads, between the heads and the drum, between the heads and the chassis walls, between the heads and the paper path, or between the heads and other components. Similarly, in applications where the insulating blanket is utilized for insulating pipes, the space available is limited by the size of the pipe relative to the materials surrounding the pipe, such as for example, components of a structure such as a wall within which the pipe may be disposed.

Thus, the blanket may have a total thickness of from about 0.1 mm to about 100 mm thick, or from about 0.1 mm to about 10 mm thick, or from about 0.1 mm to about 2 mm thick, or from about 0.1 mm to about 1 mm thick.

Embodiments may comprise from 2 to about 100 film layers, or from 2 to about 20 film layers, or from 2 to about 10 film layers, or from about 6 to about 8 film layers. The exact number of film layers for a particular embodiment may be optimized, based on the particular application for which the insulation blanket is intended, and the particular materials employed, as discussed above. For example, as more film layers or conductive barriers are added, the marginal increase in insulative value of the resulting blanket may become progressively smaller. Thus, the value, to the performance of the blanket, of adding additional film layers or conductive barriers may be minimal. The cost of adding additional film layers or conductive barriers, relative to performance, may be such that an optimal number, or range, of film layers and conductive barriers may be determined.

Alternatively, the optimal number of film layers and conductive barriers may be determined by simply building up the blanket until a particular insulative value is reached. This may be useful, for example, where meeting particular energy efficiency standards is necessary. Many electronic items, such as televisions, computers, printers, appliances and the like, may qualify for certain "ratings" such as "energy star" by meeting certain efficiency standards. Embodiments of the insulating blankets described herein may be designed in order to reduce energy consumption through heat-loss, with the objective of meeting such standards. Embodiments may be designed with a sufficient number of film layers to meet those standards. Thus, the number of film layers and conductive barriers, and the composition of each film layer and conductive barrier may be designed such that those standards are met, but not significantly exceeded, as additional film layers and conductive barriers may increase the cost of such insulative blankets.

Insulating blankets described herein provide excellent thermal conductivity, for example from about 10 mW/m to about 20 mW/m.

The thermal blankets described herein are suitable for providing insulation for items with temperatures up to about 250°C, for example from about -250°C to about 250°C, or from about -100°C to about 200°C, or from about 0°C to about 200°C, or from about 25°C to about 200°C, or from about 100°C to about 200°C.

The insulating blanket may be made by any suitable method. For example, multiple film layers and conductive barriers, such as film layers of aluminized PET and conductive barriers of PE/PP mesh may be stacked, for example in an alternating film layer/conductive barrier construction, and pressed between two plates. Heat may be applied while pressing, for example by an oven heated to from about 150°C to about 250°C, such as about 200°C, for about 10 to about 90 minutes, such as about 45 minutes, to heat bond the laminate together. The blanket may subsequently be cooled to ambient temperature.

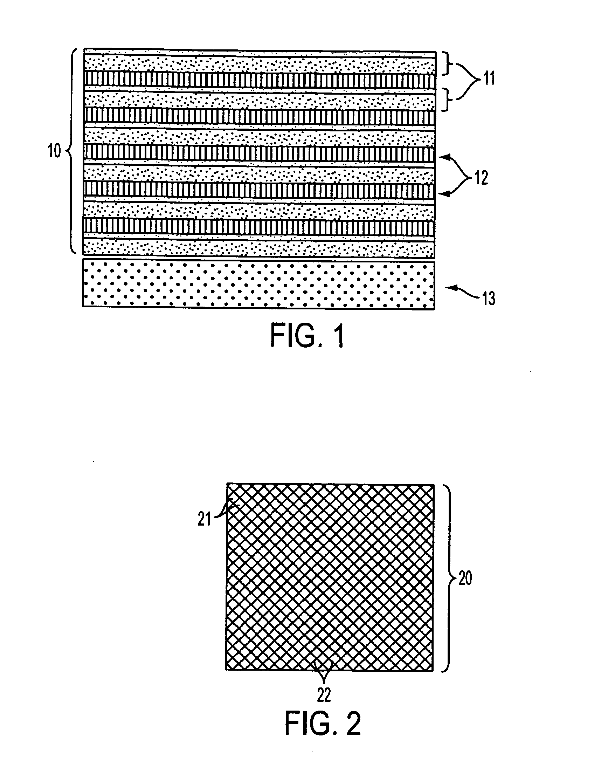

The insulating blanket (10) depicted in FIG. 1 is one desirable embodiment, where each film layer (11) is polyethylene terephthalate (PET) metallized with aluminum, and the conductive barrier (12) is thermoplastic PE on both sides of a PP core, with the blanket being heat bonded such that each conductive barrier is bonded to the two film layers between which it is disposed. FIG. 1 is a cross-sectional view of an embodiment consisting of six layers of metallized polyethylene terephthalate (PET) film, each film layer separated by polyethylene (PE)/polypropylene (PP) mesh as the conductive barrier. In the embodiment shown in FIG. 1, each layer of PET is metallized on one side, where the metallized side faces away from a heat source (13). FIG. 2 is a flat view of the PE/PP mesh utilized as a conductive barrier between each layer of metallized PET film of the embodiment shown in FIG. 1. Each film layer is heat bonded to the PE/PP mesh conductive barrier between adjacent film layers. Desirably, as shown, the outer layers of the blanket are both metallized film layers.

The insulating blanket depicted in FIG. 1 has an effective thermal conductivity of about 11 mW/m, with a total thickness of about 1 mm. The blanket provides great flexibility, low particulate generation, and very low manufacturing cost. The blanket is suitable to provide insulation for heat sources up to about 150°C.

FIG. 2 shows a flat view of a desirable embodiment of the conductive barrier, that is utilized in the embodiment depicted in FIG. 1. The conductive barrier depicted is a PE/PP mesh (20), comprising open voids (21) and PE/PP network (22).

The insulating blanket described herein may be used to insulate any suitable item. The insulating blanket may be applied directly to a surface of the item for which insulation is desired. For example, the insulating blanket can be placed directly on the outer surface of storage or transportation vessels, pipes, print heads, such as for example, solid ink print heads, cryogenic vessels or any other item for which insulation is desirable. Multiple sheets or strips of the insulation blanket may be applied to a surface to be insulated. Sheets or strips of the insulation blanket may also be wrapped around the surface to be insulated, such as pipes, tanks and the like.

In a particular embodiment, the item to be insulated may be a solid ink print head. An embodiment suitable for solid ink print head utilizes about 6 layers of aluminized PET, where each layer is about 1 mil thick, separated by a 10 mil thick PE/PP mesh having about 65% open voids and about 35% PE/PP network, with each film layer being heat bonded to the PE/PP mesh disposed adjacent thereto, resulting in a material having a total thickness of about 1 mm. This embodiment is capable of reducing the power loss of a 90°C aluminum block by about 45%. The power loss, or conductivity, may be measured, for example, by completely covering an aluminum body with the insulating blanket and heating the aluminum body to 90°C, within an enclosure having a steady state temperature of about 30°C. By measuring the temperature of the inner and outer surfaces of the insulation blanket, and measuring the power required to maintain the temperature of the aluminum body, the thermal conductivity can be calculated given the blanket thickness and total outer surface area.

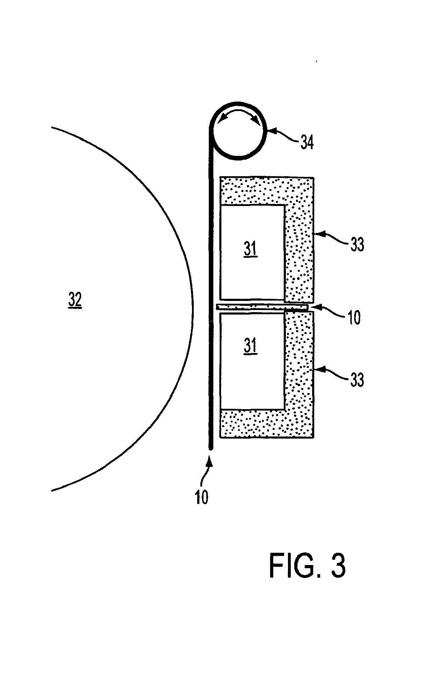

FIG. 3 shows an embodiment of the multiple layer blanket insulation (10) in association with print heads (31). The multiple layer blanket insulation described herein is capable of being placed in the small spaces between the print heads, and between the print heads and the drum (32), whereas thicker insulation types (33) are not suitable for such applications. As shown in FIG. 3, the multiple layer blanket insulation may be stored in and dispensed from a rolled form (34).

The use of an air impermeable cover may permit the insulating blanket disposed within to be subjected to a pressure below atmospheric pressure, which results in the reduction of heat transfer by conduction. Alternatively, the layers themselves may be made from an air impermeable material, allowing the material, for example, air or other gas, within the pockets of the nonconductive barrier to be at a pressure below atmospheric pressure.

The lower pressure may be attained by establishing a vacuum within the air-impermeable layers or container, which may be done using conventional vacuum equipment. Alternatively, such as for example in embodiments where heat bonding is used to bond the layers and mesh, the heat bonding process itself will result in a vacuum being established within the pockets of the nonconductive barrier when the gas or air within the pockets, for a particular application, is at a temperature lower than the heat bonding temperature.

For example, when utilized as a solid ink print head insulator, the sleep temperature of the print head is typically about 90°C, which is significantly lower than a heat bond temperature, which is typically about 200°C. This temperature differential will result in a vacuum within the pockets of the nonconductive barrier, where the film layers are air impermeable or where the blanket is within a container that is air impermeable.

### Examples:

Example 1: Aluminized PET film (1 mil thick Mylar^{™}) was cut into sheets. Six of the cut sheets were arranged in a stack, metalized side up, with a layer of PE/PP mesh 10 mil thick having about 65% open voids (Delnet®; obtained from DelStar Technologies, Inc., Middletown, DE), between each. This stacked configuration was then heated in an oven to a temperature of about 200°C for about 45 minutes and subsequently cooled to room temperature (about 25°C).

The laminate thus produced is thin (about 1 mm), flexible, and may be cut into any desirable shape for application.

The film was then tested for insulative value by the methods described previously and determined to have a thermal conductivity of 11 mW/m.

Example 2: six to eight layers of polyimide film thermoset with aluminum (obtained from Sheldahl; Northfield, MN) is stacked using 1-2 mil thick polyimide thermoplastic mesh as the conductive barrier between each. The stacked configuration is then heated to about 250°C for about 45 minutes and then cooled to room temperature.

The laminate thus produced is thin, flexible, and may be cut into any desirable shape for application.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art which are also intended to be encompassed by the following claims.

## Claims

1. An insulating blanket (10) comprising a plurality of film layers (11) and at least one conductive barrier (12) disposed between at least two of the plurality of film layers (11), wherein at least one of the plurality of film layers (11) comprises a film coated (13) on at least one side with a heat reflective material, wherein the at least one conductive barrier (12) comprises a network comprising multiple voids (21).

2. The insulating blanket of claim 1, wherein at least one of the plurality of film layers is a polymer film.

3. The insulating blanket of claim 1, wherein the heat reflective material is a metal selected from the group consisting of aluminum, gold, silver, platinum, copper, nickel and combinations thereof.

4. The insulating blanket of claim 1, wherein the network further comprises:
• a material selected from the group consisting of polyethylene terephthalate (PET), polyimide (PI), polyethylene (PE), polyamide (PA), polypropylene (PP), polyvinyl dichloride (PVDC) and combinations thereof; and/or
• from 65% to 90% voids.

5. The insulating blanket of claim 1, comprising from 2 to 10 film layers and/or a conductive barrier between each of the plurality of film layers.

6. The insulating blanket of claim 1, wherein the blanket has a thermal conductivity of from 10 mW/m to 20 mW/m.

7. The insulating blanket of claim 1, wherein the blanket is from 0.1 mm to 10 mm thick.

8. The insulating blanket of claim 1, wherein the blanket comprises at least two polymer film layers, each polymer film layer is metallized on one side and a thermoplastic mesh conductive barrier between each of the polymer film layers, wherein the polymer film layers and thermoplastic mesh are bonded together.

9. The insulating blanket of claim 2 or 8, wherein the polymer film is composed of a polymer selected from polyethylene terephthalate (PET), polyimide (PI), polyethylene (PE), polyamide (PA), polypropylene (PP), polyvinyl dichloride (PVDC) or a combination thereof.

10. The insulating blanket of claim 8, wherein each film layer consists of metalized polyethylene terephthalate (PET) or polyimide (PI) film; preferably the conductive barrier between each film layer is polyethylene terephthalate (PET) or polyimide (PI) in a thermoplastic form.

11. The insulating blanket of claim 8, wherein each film layer is between about 0.5 mils (0,0127 mm) and about 10 mils (0,254 mm) thick.

12. The insulating blanket of claim 8, wherein the insulating blanket is less than 2 mm thick; preferably is about 1 mm thick.

13. A printer comprising a print head, and in association therewith, an insulating blanket according to claim 1-12 comprising a plurality of film layers and at least one conductive barrier disposed between at least two of the plurality of film layers, wherein at least one of the plurality of film layers comprises a film coated on at least one side with a heat reflective material.

14. The printer of claim 13, wherein the print head is a solid ink print head.

## Patentansprüche

1. Isoliermatte (10) umfassend eine Vielzahl von Filmschichten (11) und wenigstens eine leitende Sperrschicht (12), welche zwischen wenigstens zwei der Vielzahl von Filmschichten (11) angeordnet ist, wobei wenigstens eine der Vielzahl von Filmschichten (11) einen auf wenigstens einer Seite mit einem wärmereflektierenden Material beschichteten Film (13) umfasst, wobei die wenigstens eine leitende Sperrschicht (12) ein Netzwerk umfasst, umfassend eine Vielzahl von Hohlräumen (21).

2. Isoliermatte nach Anspruch 1, wobei wenigstens eine der Vielzahl von Filmschichten ein Polymerfilm ist.

3. Isoliermatte nach Anspruch 1, wobei das wärmereflektierende Material ein Metall ist, gewählt aus der Gruppe bestehend aus Aluminium, Gold, Silber, Platin, Kupfer, Nickel und deren Kombinationen.

4. Isoliermatte nach Anspruch 1, wobei das Netzwerk des Weiteren umfasst:
- ein Material gewählt aus der Gruppe bestehend aus Polyethylenterephthalat (PET), Polyimid (PI), Polyethylen (PE), Polyamid (PA), Polypropylen (PP), Polyvinyldichlorid (PVDC) und deren Kombination; und/oder
- von 65% bis 90 % Hohlräume.

5. Isoliermatte nach Anspruch 1, umfassend von 2 bis 10 Filmschichten und/oder eine leitende Sperrschicht zwischen jeder der Vielzahl von Filmschichten.

6. Isoliermatte nach Anspruch 1, wobei die Matte eine thermische Leitfähigkeit von ungefähr 10 mW/m bis 20 mW/m aufweist.

7. Isoliermatte nach Anspruch 1, wobei die Matte von 0,1 mm bis 10 mm dick ist.

8. Isoliermatte nach Anspruch 1, wobei die Matte wenigstens zwei Polymerfilmschichten umfasst, jede Polymerfilmschicht auf einer Seite metallisiert ist und eine leitfähige thermoplastische Netzsperrschicht zwischen jeder der Polymerfilmschichten angeordnet ist, wobei die Polymerfilmschichten und das thermoplastischen Netz miteinander verbunden sind.

9. Isoliermatte nach Anspruch 2 oder 8, wobei der Polymerfilm aus einem Polymer zusammengesetzt ist, gewählt aus Polyethylenterephthalat (PET), Polyimid (PI), Polyethylen (PE), Polyamid (PA), Polypropylen (PP), Polyvinyldichlorid (PVDC) oder einer Kombination dieser.

10. Isoliermatte nach Anspruch 8, wobei jede Filmschicht aus metallisiertem Polyethylenterephthalat (PET) oder Polyimid (PI) Film besteht; die leitende Sperrschicht zwischen jeder Filmschicht Polyethylenterephthalat (PET) oder Polyimid (PI) in einer thermoplastischen Form ist.

11. Isoliermatte nach Anspruch 8, wobei jede Filmschicht zwischen ungefähr 0,5 mils (0127 mm) und ungefähr 10 mils (0,254 mm) dick ist.

12. Isoliermatte nach Anspruch 8, wobei die isolierende Decke weniger als 2 mm dick ist; vorzugsweise ungefähr 1 mm dick.

13. Drucker umfassend einen Druckkopf, und in Verbindung mit diesem, eine Isoliermatte nach Anspruch 1 bis 12, umfassend eine Vielzahl von Filmschichten und wenigstens eine leitende Sperrschicht, welche zwischen wenigstens zwei der Vielzahl von Filmschichten angeordnet ist, wobei wenigstens eine der Vielzahl von Filmschichten einen Film umfasst, beschichtet auf wenigstens einer Seite mit einem wärmereflektierenden Material.

14. Drucker nach Anspruch 13, wobei der Druckkopf ein Festtinten-Druckkopf ist.

## Revendications

1. Garniture isolante (10) comprenant une pluralité de couches de film (11) et au moins une barrière conductrice (12) disposée entre au moins deux de la pluralité de couches de film (11), où au moins l'une de la pluralité de couches de film (11) comprend un film revêtu (13) sur au moins un côté avec un matériau thermo-réfléchissant, où l'au moins une barrière conductrice (12) comprend un réseau comprenant de multiples cavités (21).

2. Garniture isolante de la revendication 1, dans laquelle au moins l'une de la pluralité de couches de film est un film de polymère.

3. Garniture isolante de la revendication 1, dans laquelle le matériau thermo-réfléchissant est un métal choisi dans le groupe constitué d'aluminium, d'or, d'argent, de platine, de cuivre, de nickel et leurs combinaisons.

4. Garniture isolante de la revendication 1, dans laquelle le réseau comprend en outre :
un matériau choisi dans le groupe constitué de polyéthylène téréphtalate (PET), de polyimide (PI), de polyéthylène (PE), de polyamide (PA), de polypropylène (PP), de dichlorure de polyvinyle (PVDC) et leurs combinaisons ; et/ou
de 65% à 90% de cavités.

5. Garniture isolante de la revendication 1, comprenant de 2 à 10 couches de film et/ou une barrière conductrice entre chacune de la pluralité de couches de film.

6. Garniture isolante de la revendication 1, dans laquelle la couverture a une conductivité thermique de 10 mW/m à 20 mW/m.

7. Garniture isolante de la revendication 1, dans laquelle la garniture a une épaisseur de 0,1 mm à 10 mm.

8. Garniture isolante de la revendication 1, dans laquelle la garniture comprend au moins deux couches de film de polymère, chaque couche de film de polymère est métallisée sur un côté et une barrière conductrice de maille thermoplastique entre chacune des couches de film de polymère, où les couches de film de polymère et la maille thermoplastique sont liées ensemble.

9. Garniture isolante de la revendication 2 ou 8, dans laquelle le film de polymère est composé d'un polymère choisi parmi le téréphtalate de polyéthylène (PET), le polyimide (PI), le polyéthylène (PE), le polyamide (PA), le polypropylène (PP), le di-chlorure de polyvinyle (PVDC) ou une combinaison de ceux-ci.

10. Garniture isolante de la revendication 8, dans laquelle chaque couche de film est constituée d'un film de téréphtalate de polyéthylène métallisé (PET) ou de polyimide (PI) ; préférablement la barrière conductrice entre chaque couche de film est un téréphtalate de polyéthylène (PET) ou un polyimide (PI) sous forme thermoplastique.

11. Garniture isolante de la revendication 8, dans laquelle chaque couche de film a une épaisseur comprise entre environ 0,5 mils (0,0127 mm) et environ 10 mils (0,254 mm).

12. Garniture isolante de la revendication 8, dans laquelle la garniture isolante a une épaisseur inférieure à 2 mm ; préférablement d'environ 1 mm.

13. Imprimante comprenant une tête d'impression, et en liaison avec celle-ci, une garniture isolante selon les revendications 1 à 12, comprenant une pluralité de couches de film et au moins une barrière conductrice disposée entre au moins deux de la pluralité de couches de film, où au moins l'une de la pluralité de couches de film comprend un film revêtu sur au moins un côté d'un matériau thermo-réfléchissant.

14. Imprimante de la revendication 13, dans laquelle la tête d'impression est une tête d'impression à encre solide.
